Europäisches Patentamt

(19) European Patent Office

Office européen des brevets

(11) EP 0 802 824 B1

(12) FASCICULE DE BREVET EUROPEEN

(45) Date de publication et mention
de la délivrance du brevet:
**24.03.1999 Bulletin 1999/12**

(21) Numéro de dépôt: **96901040.4**

(22) Date de dépôt: **10.01.1996**

(51) Int. Cl.$^6$: **B01J 23/83**, B01J 23/34,
B01J 23/10

(86) Numéro de dépôt international:
**PCT/FR96/00039**

(87) Numéro de publication internationale:
**WO 96/21506 (18.07.1996 Gazette 1996/33)**

(54) **COMPOSITION CATALYTIQUE A BASE D'OXYDE DE CERIUM ET D'OXYDE DE MANGANESE, DE FER OU DE PRASEODYME, SON PROCEDE DE PREPARATION ET SON UTILISATION EN CATALYSE POSTCOMBUSTION AUTOMOBILE**

KATALYTISCHE ZUSAMMENSETZUNG AUF BASIS VON CERIUMOXID UND MANGAN-, EISEN- ODER PRASEODYMIUM-OXID, METHODE ZU DEREN HERSTELLUNG UND DEREN VERWENDUNG IN NACHVERBRENNUNGSKATALYSE BEI KRAFTFAHRZEUGEN

CATALYTIC COMPOSITION BASED ON CERIUM OXIDE AND MANGANESE, IRON OR PRASEODYMIUM OXIDE, METHOD FOR PREPARING SAME AND USE THEREOF IN MOTOR VEHICLE POST-COMBUSTION CATALYSIS

(84) Etats contractants désignés:
**AT BE DE FR GB IT**

(30) Priorité: **13.01.1995 FR 9500344**

(43) Date de publication de la demande:
**29.10.1997 Bulletin 1997/44**

(73) Titulaire: **RHODIA CHIMIE**
**92408 Courbevoie Cédex (FR)**

(72) Inventeurs:
- **BLANCHARD, Gilbert**
  **F-60330 Lagny-le-Sec (FR)**
- **QUEMERE, Eric**
  **F-95240 Cormeilles-en-Parisis (FR)**

- **TOURET, Olivier**
  **F-17000 La Rochelle (FR)**
- **VISCIGLIO, Valérie**
  **F-75016 Paris (FR)**

(74) Mandataire:
**Dubruc, Philippe et al**
**RHODIA SERVICES**
**Direction de la Propriété Industrielle**
**25, quai Paul Doumer**
**92408 Courbevoie Cédex (FR)**

(56) Documents cités:
| | |
|---|---|
| **EP-A- 0 514 177** | **EP-A- 0 525 677** |
| **EP-A- 0 588 691** | **EP-A- 0 614 854** |
| **EP-A- 0 624 399** | **EP-A- 0 684 072** |
| **EP-A- 0 684 073** | **US-A- 4 499 324** |

**Description**

La présente invention concerne une composition catalytique constituée d'oxyde de cérium et d'oxyde de fer et de praséodyme, son procédé de préparation et son utilisation en catalyse postcombustion automobile.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies").

Pour ce type de catalyseurs, l'oxyde de cérium est un élément couramment utilisé. Cet oxyde est généralement présent sur un support comme l'alumine.

Comme les carburants contiennent du soufre, l'oxyde de cérium et le support se sulfatent. Lorsque l'atmosphère du catalyseur devient réductrice, par exemple lorsque la demande de puissance du moteur cesse brusquement, les sulfates fixés sur l'oxyde et le support se réduisent en $H_2S$ ce qui provoque l'émission d'odeurs nauséabondes.

Or, pour des raisons évidentes d'environnement, il importe de réduire et contrôler ces émissions d'$H_2S$.

Une solution proposée est d'ajouter de l'oxyde de nickel à la formulation catalytique. Cependant, dans certains pays, notamment en Europe, le nickel est proscrit par les normes en vigueur dans ce domaine technique de sorte que cette solution est inapplicable.

EP-A-624399 décrit un procédé de préparation d'un catalyseur à base d'oxyde de cérium, d'oxyde de fer et, éventuellement, d'un oxyde d'une terre rare, déposé sur un support céramique ou métallique. Ce catalyseur est utilisable dans le traitement des gaz d'échappement. Toutefois, ce document n'est pas concerné par le problème de la réduction des émissions d'$H_2S$ et, plus particulièrement, par celui du contrôle de ces émissions.

Il existe donc un besoin réel d'une composition catalytique utilisable en catalyse postcombustion automobile qui permette le contrôle des émissions d'$H_2S$.

Dans ce but, le procédé de l'invention, pour le traitement des gaz d'échappement des moteurs à combustion interne pour le contrôle des émissions d'$H_2S$ est caractérisé en ce que l'on utilise un catalyseur comprenant une composition qui est constituée d'oxyde de cérium, d'oxyde de fer et d'oxyde de praséodyme, la teneur en fer et en praséodyme exprimée en rapport massique des oxydes de ces éléments par rapport à l'oxyde de cérium étant comprise entre 0,5 et 50%, l'oxyde de cérium constituant le reste de la composition.

Par ailleurs, selon un premier mode de réalisation, la composition utilisée dans la présente invention peut être préparée par un procédé qui est caractérisé en ce qu'il comprend les étapes suivantes :

- on prépare un mélange en milieu liquide contenant un composé du cérium et au moins un composé du fer et du praséodyme;
- on chauffe ledit mélange;
- on récupère le précipité ainsi obtenu;
- on calcine ledit précipité.

Selon un second mode de réalisation, la composition utilisée dans la présente invention peut être préparée par un procédé qui est caractérisé en ce qu'il comprend les étapes suivantes :

- on prépare un mélange en milieu liquide contenant un composé du cérium et au moins un composé du fer et du praséodyme;
- on ajoute audit mélange un composé basique, ce par quoi on fait précipiter le mélange;
- on récupère le précipité ainsi obtenu;
- on calcine ledit précipité.

Selon un troisième mode de réalisation, la composition utilisée dans la présente invention peut être préparée par un procédé qui est caractérisé en ce qu'il comprend les étapes suivantes :

- on prépare un mélange en milieu liquide contenant un sol de cérium et au moins un composé du fer et du praséodyme;
- on sèche par atomisation le mélange ainsi obtenu;
- on calcine le produit séché.

Enfin, selon un quatrième mode de réalisation, la composition utilisée dans la présente invention peut être préparée par un procédé qui est caractérisé en ce qu'on imprègne un oxyde de cérium avec une solution d'au moins un composé du fer et du praséodyme puis on calcine l'oxyde de cérium imprégné.

D'autres caractéristiques, détails et avantages de l'invention apparaîtront encore plus complètement à la lecture de la description qui va suivre, ainsi que des divers exemples concrets mais non limitatifs destinés à l'illustrer.

Comme indiqué plus haut, les compositions catalytiques de l'invention sont à base de cérium et d'oxydes de fer et de praséodyme.

Selon une variante particulière de l'invention, les compositions présentent une phase majoritaire de type solution solide ou oxyde mixte. Selon encore une autre variante, les compositions de l'invention se présentent totalement sous forme d'une solution solide. Par solution solide, on entend que les spectres en diffraction X de ces compositions ne révèlent en effet, au sein de ces dernières, l'existence que d'une seule phase identifiable (absence de phase secondaire parasite détectable) et qui correspond en fait à celle d'un oxyde cérique cristallisé dans le système cubique et dont les paramètres de mailles sont plus ou moins décalés par rapport à un oxyde cérique pur, traduisant ainsi l'incorporation ddu fer et/ou du praséodyme dans le réseau cristallin de l'oxyde de cérium, et donc l'obtention d'une solution solide vraie.

La quantité de fer et de praséodyme dans la composition peut varier dans de large limite. Généralement, cette proportion peut aller jusqu'à un rapport massique exprimé en oxyde de ce ou ces éléments par rapport à l'oxyde de cérium de 50%. Elle est habituellement d'au moins 0,5%. Cette proportion peut ainsi être comprise entre 1 et 40% , notamment entre 1 et 20%, plus particulièrement entre 1 et 10%.

Selon des variantes de l'invention, la composition peut comprendre en outre du zirconium.

Les compositions de l'invention présentent après calcination 6 heures à 400°C une surface spécifique d'au moins $10m^2/g$, de préférence d'au moins $60m^2/g$ et plus particulièrement d'au moins $80m^2/g$. On entend par surface spécifique, la surface spécifique B.E.T. determinée par adsorption d'azote conformément à la norme ASTM D 3663-78 établie à partir de la méthode BRUNAUER - EMMETT- TELLER décrite dans le périodique "The Journal of the American Society, 60, 309 (1938)".

Selon un mode de réalisation préféré de l'invention, une autre caractéristique des compositons de l'invention est leur homogénéité chimique. En effet, elles présentent une homogénéité chimique telle que les domaines d'hétérogénéité sont inférieurs à $10nm^2$. Ceci signifie qu'il n'y a pas de différence dans la composition chimique des produits de l'invention entre des zones de surface de $10nm^2$.

Ces caractéristiques d'homogénéité sont déterminées par analyse MET-EDS. Plus particulièrement, le domaine d'hétérogénéité a été mesuré par la méthode de cartographie par spectroscopie à dispersion d'énergie (EDS) en utilisant une microsonde de microscopie électronique à transmission (MET).

Une autre caractéristique des compositions de l'invention est leur capacité à stocker l'oxygène même après exposition à des températures élevées. Ainsi, après calcination 6 heures sous air à 900°C, ces compositions présentent généralement un stockage d'oxygène d'au moins $1mlO_2/g$ de composition, plus particulièrement d'au moins $1,5mlO_2/g$.

Différents procédés de préparation peuvent être utilisés pour les compositions de l'invention.

Selon un premier mode de réalisation de l'invention, on utilise un procédé caractérisé en ce qu'il comprend les étapes suivantes :

- on prépare un mélange en milieu liquide contenant un composé du cérium et au moins un composé du fer et du praséodyme;
- on chauffe ledit mélange;
- on récupère le précipité ainsi obtenu;
- on calcine ledit précipité.

La première étape du procédé selon l'invention consiste donc à préparer un mélange en milieu liquide, généralement en phase aqueuse, contenant au moins un composé de cérium et au moins un composé du fer et du praséodyme. Ces composés sont de préférence des composés solubles. Le mélange peut être indifféremment obtenu soit à partir de composés initialement à l'état solide que l'on introduira par la suite dans un pied de cuve d'eau, soit encore directement à partir de solutions de ces composés puis mélange, dans un ordre quelconque, desdites solutions.

A titre de composés solubles dans l'eau du cérium, on peut citer notamment les sels de cérium IV tels que nitrates ou nitrates céri-ammoniacal par exemple, qui conviennent ici particulièrement bien. De préférence, on utilise du nitrate cérique. La solution de sels de cérium IV peut contenir sans inconvénient du cérium à l'état céreux mais il est souhaitable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le carbonate céreux, et d'une solution d'ammoniaque en présence d'eau oxygénée. On peut également, de préférence, utiliser une solution de nitrate cérique obtenue selon le procédé d'oxydation électrolytique d'une solution de nitrate céreux tel que décrit dans le document FR-A- 2 570 087, et qui constitue ici une matière première de choix.

On notera ici que la solution aqueuse de sels de cérium IV peut présenter une certaine acidité libre initiale, par exemple une normalité variant entre 0,1 et 4 N. Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation; n2 représente le nombre de moles d'ions OH⁻ effectivement nécessaires pour neutraliser l'acidité libre initiale apportée par la solution aqueuse de sel de cérium IV; et n3 représente le nombre total de moles d'ions OH⁻ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde $Ce(OH)_4$ (r=4). Dans la pratique, on se limite ainsi à des taux de neutralisation n'excédant pas 1, et de préférence encore n'excédant pas 0,5.

A titre de composés de fer ou de praséodyme utilisables dans le procédé de l'invention, on peut par exemple citer les sels d'acides inorganiques ou organiques, par exemple du type sulfate, nitrate, chlorure ou acétate. On notera que le nitrate convient particulièrement bien. Ces composés peuvent aussi être apportés sous forme de sols. Ces sols peuvent être obtenus par exemple par neutralisation par une base d'un sel de ces composés.

Les quantités de cérium, de fer et de praséodyme, présentes dans le mélange doivent correspondre aux proportions stoechiométriques requises pour l'obtention de la composition finale désirée.

Le mélange initial étant ainsi obtenu, on procède ensuite, conformément à la deuxième étape du procédé selon l'invention, à son chauffage.

La température à laquelle est menée ce traitement thermique, aussi appelé thermohydrolyse, peut être comprise entre 80°C et la température critique du milieu réactionnel en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange aqueux contenant les espèces précitées dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 5 Bar (5. $10^5$ Pa) et 165 Bar (165. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

A l'issue de l'étape de chauffage, on récupère un précipité solide qui peut être séparé de son milieu par toute technique classique de séparation solide-liquide telle que par exemple filtration, décantation, essorage ou centrifugation.

Si nécessaire, on peut introduire, avant et/ou après l'étape de chauffage, une base telle que par exemple une solution d'ammoniaque, dans le milieu de précipitation. Ceci permet d'augmenter les rendements de récupération en l'espèce précipitée.

Il est aussi possible d'ajouter de la même façon, avant et/ou après l'étape de chauffage, de l'eau oxygénée soit seule soit aussi en combinaison avec la base.

On notera qu'il est bien entendu possible de répéter une ou plusieurs fois, à l'identique ou non, une étape de chauffage/précipitation telle que ci-dessus définie, en mettant alors en oeuvre par exemple des cycles de traitements thermiques.

Le produit tel que récupéré peut ensuite être soumis à des lavages à l'eau et/ou à l'ammoniaque, à une température comprise entre la température ambiante et la température d'ébullition. Pour éliminer l'eau résiduelle, le produit lavé peut enfin, éventuellement, être séché, par exemple à l'air, et ceci à une température qui peut varier entre 80 et 300°C, de préférence entre 100 et 150°C, le séchage étant poursuivi jusqu'à l'obtention d'un poids constant.

Dans une dernière étape du procédé, le précipité récupéré, après éventuellement lavage et/ou séchage, est ensuite calciné. Cette calcination est effectuée à une température comprise généralement entre 200 et 1200°C et de préférence entre 300 et 900°C. Cette température de calcination doit être suffisante pour transformer les précurseurs en oxydes, et elle est aussi choisie en fonction de la température d'utilisation ultérieure de la composition catalytique et en tenant compte du fait que la surface spécifique du produit est d'autant plus faible que la température de calcination mise en oeuvre est plus élevée. La durée de la calcination peut quant à elle varier dans de larges limites, par exemple entre 1 et 24 heures, de préférence entre 4 et 10 heures. La calcination est généralement opérée sous air, mais une calcination menée par exemple sous gaz inerte n'est bien évidemment pas exclue.

Selon un second mode de réalisation, le procédé de préparation d'une composition selon l'invention est caractérisé en ce qu'il comprend les étapes suivantes :

- on prépare un mélange en milieu liquide contenant un composé du cérium et au moins un composé du fer et du praséodyme;
- on met en présence ledit mélange avec un composé basique, ce par quoi on fait précipiter le mélange;
- on récupère le précipité ainsi obtenu;
- on calcine ledit précipité.

Tout ce qui a été dit plus haut dans la description du premier mode de réalisation pour la préparation du mélange en milieu liquide s'applique aussi ici.

On ajoutera toutefois qu'il est aussi possible d'utiliser un sol de cérium.

Les sols de cérium peuvent être obtenus par toute technique appropriée, en particulier, mais non limitativement, selon les méthodes décrites dans les demandes de brevets FR-A- 2 583 735, FR-A- 2 583 736, FR-A- 2 583 737, FR-A- 2 596 380, FR-A- 2 596 382, FR-A- 2 621 576 et FR-A- 2 655 972 qui sont toutes au nom de la Demanderesse.

Selon la présente invention, on peut mettre en oeuvre des sols de cérium dont la taille moyenne telle que déterminée par diffusion quasi-élastique de la lumière peut varier de 3 nm à 100 nm, de préférence entre 5 et 50 nm.

Il est à noter qu'il est possible aussi de partir de solutions de sels céreux et de fer III. On ajoute dans ce cas au mélange de départ un agent oxydant tel que l'eau oxygènée.

Dans la deuxième étape de ce second mode de réalisation de l'invention, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. L'ordre d'introduction des réactifs peut être quelconque, le composé basique pouvant être introduit dans le mélange ou inversement ou encore les réactifs pouvant être introduits simultanément dans le réacteur.

L'addition peut être effectuée en une seule fois, graduellement ou en continu, et elle est de préférence réalisée sous agitation. Cette opération peut être conduite à une température comprise entre la température ambiante (18 - 25°C) et la température de reflux du milieu réactionnel, cette dernière pouvant atteindre 120°C par exemple. Elle est de préférence conduite à température ambiante.

A la fin de l'addition de la solution basique, on peut éventuellement maintenir encore le milieu de réaction sous agitation pendant quelque temps, et ceci afin de partaire la précipitation.

A l'issue de l'étape de précipitation, on récupère une masse d'un précipité solide qui peut être séparé de son milieu par toute technique classique.

Les étapes de lavage et de calcination sont ensuite conduites de la même façon que celle décrite pour le premier mode de réalisation.

Selon un troisième mode de réalisation, le procédé de préparation d'une composition selon l'invention est caractérisé en ce qu'il comprend les étapes suivantes :

- on prépare un mélange en milieu liquide contenant un sol de cérium et au moins un composé du fer et du praséodyme;
- on sèche par atomisation le mélange ainsi obtenu;
- on calcine le produit séché.

Pour ce qui concerne la première étape de ce troisième mode de réalisation de l'invention, tout ce qui a été décrit plus haut à ce sujet pour les modes précédents s'applique aussi ici. On ajoutera que les éléments autres que le cérium peuvent éventuellement être apportés aussi sous forme de sol.

La deuxième étape du procédé de ce troisième mode est un séchage pu atomisation, c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet FR-A-2 257 326 FR-A-2 419 754 et FR-A-2 431 321. Dans ce cas, les gaz traitants (gaz chauds) sont animés d'un mouvement hélicoidal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz dans le réacteur "flash" est comprise entre 400 et 900°C et plus particulièrement entre 600 et 800°C, la température du solide séché entre 100 et 250°C, de préférence entre 125 et 200°C.

A l'issue de cette étape de séchage, on obtient un produit sec qui peut éventuellement être calciné de la même manière que celle décrite pour les modes de réalisation précédents.

Les trois modes de réalisations décrits ci-dessus constituent les procédés préférés pour obtenir les compositions de l'invention à grande homogénéité chimique décrites plus haut.

Selon un quatrième mode de réalisation, le procédé de préparation d'une composition selon l'invention est caractérisé en ce qu'on imprègne un oxyde de cérium avec une solution d'au moins un composé du fer et du praséodyme puis on calcine l'oxyde de cérium imprégné.

Les oxydes cériques utilisables dans l'invention sont des produits déjà bien connus en soi et ils ont été largement décrits dans la littérature, notamment dans de nombreux brevets ou demandes de brevet. Ils sont également disponibles dans le commerce.

Ils peuvent être préparés notamment par chauffage à l'air entre 400 et 1000°C d'un hydroxyde cérique ou de certains sels oxygénés tels que nitrates, sulfates, carbonates, oxalates ou acétates (cf. Paul PASCAL, "Nouveau Traité de Chimie Minérale", Tome VII, p. 777, (1959)), l'hydroxyde cérique pouvant se trouver sous forme de précipités ou de suspensions colloïdales. Il peut aussi s'agir des oxydes de cérium tels que décrits dans les demandes de brevet FR-A-2559754, FR-A-2640954 ou EP-A-300852 notamment.

Les oxydes cériques mis en oeuvre de préférence présentent une surface spécifique d'au moins 10 $m^2/g$, plus particulièrement supérieure à 80 $m^2/g$ et plus avantageusement encore comprise entre 80 et 300 $m^2/g$.

Il peut être avantageux dans certaines applications de les mettre en forme en effectuant une agglomération des particules les constituant selon des techniques bien connues d'extrusion, ou de pastillage par pression, par exemple.

Comme indiqué ci-avant, on effectue ensuite un mélange par imprégnation de l'oxyde cérique à l'aide d'une solution d'un composé du fer et/ou du praséodyme. Ce ou ces composés sont choisis parmi ceux décomposables thermiquement en oxyde et que l'on dénommera de manière simplifiée précurseur d'oxyde.

A titre de précurseurs d'oxydes convenables, on peut citer les sels d'acides organiques ou inorganiques comme les nitrates, les chlorures, les sulfates, les acétates par exemple. Les nitrates constituent les précurseurs préférés.

Selon une variante préférée de ce quatrième mode de réalisation du procédé selon l'invention, l'imprégnation est réalisée "à sec", c'est à dire que le volume total de solution utilisée est approximativement égal au volume poreux total développé par l'oxyde cérique. Concernant la détermination de ce volume poreux, elle peut être réalisée selon la méthode connue au porosimètre à mercure ou bien par mesure de la quantité d'eau absorbée par un échantillon.

Il est toutefois également possible d'imprégner le support par trempage de celui-ci dans la solution du ou des précurseurs d'oxyde et d'éliminer l'excès de solution par égouttage.

Dans une deuxième étape, on sèche l'oxyde cérique imprégné pour éliminer l'eau, en laissant ainsi les précurseurs d'oxydes sous une forme dispersée de manière homogène et intime dans, ou à la surface de, l'oxyde cérique.

Le séchage est le plus souvent effectué à l'air, à une température qui peut varier entre 80 et 300°C et choisie de préférence entre 100 et 150°C. Le séchage est poursuivi jusqu'à l'obtention d'un poids constant. Généralement, la durée du séchage est comprise entre 1 et 24 heures.

Enfin, dans une troisième étape, on calcine l'oxyde cérique imprégné dans les mêmes conditions que celles décrites précédemment.

Les compositions de l'invention telles qu'obtenues dans les procédés décrits plus haut se présentent sous forme de poudres mais elles peuvent éventuellement être mise en forme pour se présenter sous forme de granulés, billes, cylindres ou nids d'abeille de dimensions variables. Ces compositions peuvent être appliquées sur tout support utilisé habituellement dans le domaine de la catalyse, comme, par exemple, $ZrO_2$, $Al_2O_3$, $TiO_2$ ou $SiO_2$. Les compositions peuvent aussi être utilisées dans des systèmes catalytiques comprenant un revêtement (wash coat) à base de ces compositions, sur un substrat du type par exemple monolithe métallique ou en céramique. Le revêtement peut comporter lui aussi un support du type de ceux mentionnés plus haut.

L'invention concerne aussi l'utilisation d'une composition ou d'un système catalytique tels que décrits plus haut à la fabrication de catalyseur pour post combustion automobile.

Enfin, l'invention concerne l'utilisation de ces compositions ou de ces systèmes catalytiques à la catalyse de post combustion automobile, notamment en vue du contrôle des émissions d'$H_2S$.

L'invention couvre donc un procédé de traitement des gaz d'échappement des moteurs à combustion interne, en particulier des moteurs d'automobiles, notamment en vue du contrôle des émissions d'$H_2S$ et qui est caractérisé en ce que l'on utilise comme catalyseur une composition telle que décrite ci-dessus.

Dans le cas de ces utilisations en catalyse, les compositions de l'invention peuvent être employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium, le ruthenium ou l'iridium, ils peuvent notamment être incorporés aux compositions par imprégnation.

Des exemples non limitatifs vont maintenant être donnés. Les exemples 1 3 à 4 sont donnés à titre comparatif.

Exemple 1

Cet exemple illustre la synthèse d'un oxyde de cérium et de manganèse dans les proportions en poids $CeO_2$ 90%, $MnO_2$ 10%.

Dans les proportions stoechiométriques requises pour l'obtention de l'oxyde ci-dessus, on mélange une première solution de nitrate de manganèse avec une deuxième solution de nitrate cérique dont l'acidité libre initiale a été préalablement neutralisée par ajout d'ammoniaque jusqu'à l'obtention d'un faux de neutralisation r (tel que défini ci-dessus dans la description) égal à 0,5.

Le mélange ainsi obtenu est ensuite placé dans un autoclave pour y subir un traitement thermique à 150°C pendant 4 heures, sous agitation mécanique constante du milieu.

A l'issue de ce traitement, on introduit dans la suspension obtenue une solution d'ammoniaque de manière à porter le pH à 9, le tout étant ensuite agité pendant 30 minutes pour homogénéisation.

On récupère alors par décantation et soutirage des eaux-mères un précipité qui est ensuite remis en suspension dans de l'eau. Cette suspension est alors chauffée à 100°C pendant 1 heure.

Le produit est à nouveau filtré puis séché par atomisation à 110°C.

Le produit séché est enfin calciné sous air pendant 6 heures à 400°C. La surface spécifique du produit obtenu est de $95 m^2/g$.

Le diagramme de diffraction RX du produit montre la présence d'une phase cubique très majoritaire cristallisée dans le système CeO2. L'analyse MET-EDS montre une hétérogénéité inférieure à $10 nm^2$.

Exemple 2

Cet exemple concerne la synthèse d'un oxyde de cérium, de fer et de praséodyme dans les proportions en poids $CeO_2$ 80%, $Fe_2O_3$ 10% et $Pr_6O_{11}$ 10%.

On prépare des solutions de nitrate de fer, de praséodyme et de nitrate cérique avec les proportions requise pour obtenir la composition finale désirée.

Dans une première étape, on introduit la solution de nitrate de fer dans le réacteur. Cette solution est ensuite préneutralisée par de l'ammoniaque jusqu'à r=0,5, r étant défini ici pour le fer de la même manière que celle donnée plus haut pour le cérium. Ceci permet de former in situ une solution colloïdale d'oxyde de fer.

On ajoute ensuite la solution de nitrate cérique dont l'acidité libre initiale a été préalablement neutralisée par ajout d'ammoniaque jusqu'à r=0 puis la solution de nitrate de praséodyme.

Le mélange ainsi obtenu est ensuite placé en autoclave. La suite du traitement est identique à celui décrit dans l'exemple 1. Le produit calciné sous air pendant 6 heures à 450°C présente une surface de $105 m^2/g$. L'analyse MET-EDS montre une hétérogénéité inférieure à $10 nm^2$.

Exemple 3

Cet exemple illustre la synthèse par coprécipitation d'un oxyde de cérium et de manganèse dans les proportions en poids $CeO_2$ 90%, $MnO_2$ 10%.

On prépare un mélange de nitrate céreux et de nitrate de manganèse dans les proportions nécessaires pour obtenir la composition finale. On ajoute à ce mélange de l'eau oxygènée de façon à assurer l'oxydation de Ce III en Ce IV et de Mn II en Mn IV. La quantité d'eau oxygénée est excédentaire de 10% par rapport à la quantité stoéchiométrique nécessaire pour cette oxydation. On introduit le tout dans un pied de cuve d'ammoniaque sous agitation mécanique.

On récupère alors par filtration un précipité qui est ensuite lavé puis remis en suspension dans un excès d'eau puis filtré à nouveau.

Le produit calciné sous air pendant 6 heures à 400°C présente une surface de 99m$^2$/g. L'analyse MET-EDS montre une hétérogénéité inférieure à 10nm$^2$.

Exemple 4

Cet exemple illustre la synthèse d'un oxyde de cérium et de praséodyme dans les proportions en poids CeO$_2$ 95%, Pr$_6$O$_{11}$ 5%.

On procède comme dans l'exemple 1 avec les proportions requise pour obtenir la composition finale désirée.

Le produit après calcination sous air pendant 6 heures à 400°C présente une surface spécifique de 149m$^2$/g.

Exemple 5

Cet exemple illustre les propriétés des compositions des exemples dans le contrôle des émissions d'H$_2$S.

Préparation des catalyseurs :

Pour la conduite du test permettant de quantifier la quantité de H$_2$S émise qui sera décrit ci-dessous, les échantillons doivent être imprégnés de platine. L'imprégnation du platine sur les oxydes à base de cérium est conduite de la façon suivante :

- 10 g d'oxyde au préalablement calciné à 500°C sous air pendant 6 heures sort placés dans un bécher;
- puis 0,1 g de platine est introduit à partir d'une solution aqueuse d'acide hexachloroplatinique à 3,74 g/l.

Après trois heures d'agitation à température ambiante, on centrifuge à 1500 tr/min. pendant 15 minutes la suspension, puis le solide récupéré est séché à 120°C pendant 12 heures, puis calciné à 480°C pendant 6 heures sous air.

Description du test permettant de quantifier la quantité de H$_2$S émise :

Un échantillon de 0,1 g d'oxyde platiné selon la méthode décrite plus haut est activé "in situ" jusqu'à 450°C sous un balayage d'un mélange 5% en volume d'hydrogène dans de l'azote avec une rampe de montée de 10°C par minute. Le débit total gazeux est de 30 l/h et le test fonctionne à la pression atmosphérique. Une purge d'azote est alors effectuée pendant 10 minutes, puis le catalyseur est soumis à un flux gazeux qui renferme de l'oxygène, du dioxyde de soufre et de l'azote pendant 30 minutes. La composition volumique du mélange est la suivante :

- 0$_2$ :     4,5%
- SO$_2$ :     54 ppm
- N$_2$ :     95,33%

Après cette période de sulfatation, une purge d'azote sous 30 l/h est effectuée pendant 10 minutes. Le catalyseur est ensuite soumis à un balayage d'un mélange 2% en volume d'hydrogène dans l'azote pendant 20 minutes sous un débit total de mélange de 30 l/h. La quantité de H$_2$S émise lors de cette période de réduction est déterminée en continu à l'aide d'un analyseur UV Hartmann et Braun Radas 2. Ce cycle de sulfatation/réduction peut être répété.

La quantité totale de H$_2$S désorbée du catalyseur à 450°C est déterminée par intégration de la courbe : concentration H$_2$S dans le gaz en sortie de réacteur = f (t) ou t est le temps. Les résultats sont exprimés en $\mu$mole de H$_2$S désorbée pour 1 g d'oxyde platiné introduit dans le test.

Description du test permettant de quantifier le stockage de l'oxygène

Le pouvoir tampon d'une composition vis-à-vis de l'oxygène est évalué par sa capacité a stocker l'oxygène en milieu oxydant et à le restituer en milieu réducteur. Le test évalue la capacité de la composition a oxyder successivement des pulses d'oxygène puis de monoxyde de carbone. La méthode employée est dite alternée.

Le gaz porteur est de l'hélium pur à un débit de 10l/h. Les injections se font par l'intermédiaire de boucle contenant 16ml de gaz. Les pulses de CO sont effectués en utilisant un mélange gazeux contenant 5% de CO dilué dans l'hélium tandis que les pulses d'O$_2$ se font à partir d'un mélange gazeux contenant 2,5% d'O$_2$ dilué dans l'hélium. L'analyse des gaz est effectuée par chromatographie a l'aide d'un détecteur de conductivité thermique.

La quantité d'oxygène consommée ou la proportion de CO transformée permet de déterminer la capacité de stockage d'oxygène. La valeur caractéristique du pouvoir de stockage d'oxygène est exprimée en ml d'oxygène par gramme de produit introduit et elle est mesurée a 400°C. Les mesures de pouvoir de stockage d'oxygène données dans le tableau qui suit sont faites sur des produits prétraités à 900°C sous air pendant 6 heures dans un four à moufle.

Résultats :

| Essais | $\mu$mole de H$_2$S désorbée pour m$^2$ d'oxyde platiné introduit dans le test | Stockage d'oxy-gène |
|---|---|---|
| 1 Ce0$_2$ comparatif | 1,5 | 0,8 |
| 2 Produit de l'exemple 1 | 0,2 | 2,1 |
| 3 Produit de l'exemple 2 | 0,3 | 3,9 |
| 4 Produit de l'exemple 3 | 0,25 | 2 |
| 5 Produit de l'exemple 4 | 1,3 | 1,8 |

Le produit de l'essai 1 est un oxyde préparé par thermohydrolyse d'une solution d'un sel de cérium IV en présence d'une base. Il a une surface spécifique de 100m2/g après calcination 6 heures à 600°C.

**Revendications**

1. Procédé de traitement des gaz d'échappement des moteurs à combustion interne pour le contrôle des émissions d'H$_2$S, caractérisé en ce que l'on utilise un catalyseur comprenant une composition qui est constituée d'oxyde de cérium, d'oxyde de fer et d'oxyde de praséodyme, la teneur en fer et en praséodyme exprimée en rapport massique des oxydes de ces éléments par rapport à l'oxyde de cérium étant comprise entre 0,5 et 50%, l'oxyde de cérium constituant le reste de la composition.

2. Procédé selon la revendication 1, caractérisé en ce que l'on utilise un catalyseur comprenant une composition précitée sur un support.

3. Procédé selon la revendication 1 ou 2, caractérisé en ce que l'on utilise un catalyseur comprenant une composition ayant été obtenue par un procédé de préparation qui comprend les étapes suivantes :

   - on prépare un mélange en milieu liquide d'un composé du cérium, d'un composé du fer et d'un composé du praséodyme;
   - on chauffe ledit mélange;
   - on récupère le précipité ainsi obtenu;
   - on calcine ledit précipité.

4. Procédé selon la revendication 1 ou 2, caractérisé en ce que l'on utilise un catalyseur comprenant une composition ayant été obtenue par un procédé de préparation qui comprend les étapes suivantes :

   - on prépare un mélange en milieu liquide d'un composé du cérium, d'un composé du fer et d'un composé du praséodyme;
   - on met en présence ledit mélange et un composé basique, ce par quoi on fait précipiter le mélange;
   - on récupère le précipité ainsi obtenu;
   - on calcine ledit précipité.

5. Procédé selon la revendication 3 ou 4, caractérisé en ce que le composé du cérium est un sel de cérium IV.

6. Procédé selon la revendication 1 ou 2, caractérisé en ce que l'on utilise un catalyseur comprenant une composition ayant été obtenue par un procédé de préparation qui comprend les étapes suivantes :

   - on prépare un mélange en milieu liquide d'un sol de cérium, d'un composé du fer et d'un composé du praséodyme ;
   - on sèche par atomisation le mélange ainsi obtenu ;
   - on calcine le produit séché.

7. Procédé selon la revendication 1 ou 2, caractérisé en ce que l'on utilise un catalyseur comprenant une composition ayant été obtenue par imprègnation d'un oxyde de cérium avec une solution d'un composé du fer et d'un composé du praséodyme puis calcination de l'oxyde de cérium imprégné.

8. Système catalytique pour la mise en oeuvre d'un procédé selon l'une des revendications précédentes, caractérisé en ce qu'il comprend un revêtement à base d'une composition précitée sur un substrat.

**Claims**

1. Process for the treatment of exhaust gases from internal combustion engines for controlling $H_2S$ emissions, characterized in that use is made of a catalyst comprising a composition which is composed of cerium oxide, of iron oxide and of praseodymium oxide, the iron and praseodymium content, expressed as ratio by mass of the oxides of these elements with respect to cerium oxide, being between 0.5 and 50%, cerium oxide constituting the remainder of the composition.

2. Process according to claim 1, characterized in that use is made of a catalyst comprising an above-mentioned composition on a support.

3. Process according to claim 1 or 2, characterized in that use is made of a catalyst comprising a composition which has been obtained by a preparation process which comprises the following stages:

   - a mixture is prepared in liquid medium of a cerium compound, of an iron compound and of a praseodymium compound;
   - the said mixture is heated;
   - the precipitate thus obtained is recovered;
   - the said precipitate is calcined.

4. Process according to claim 1 or 2, characterized in that use is made of a catalyst comprising a composition which has been obtained by a preparation process which comprises the following stages:

   - a mixture is prepared in liquid medium of a cerium compound, of an iron compound and of a praseodymium compound;
   - the said mixture and a basic compound are brought together, whereby the mixture is caused to precipitate;
   - the precipitate thus obtained is recovered;
   - the said precipitate is calcined.

5. Process according to claim 3 or 4, characterized in that the cerium compound is a cerium(IV) salt.

6. Process according to claim 1 or 2, characterized in that use is made of a catalyst comprising a composition which has been obtained by a preparatation process which comprises the following stages:

   - a mixture is prepared in liquid medium of a cerium sol, of an iron compound and of a praseodymium compound;
   - the mixture thus obtained is dried by atomization;
   - the dried product is calcined.

7. Process according to claim 1 or 2, characterized in that use is made of a catalyst comprising a composition which has been obtained by impregnation of a cerium oxide with a solution of an iron compound and of a praseodymium compound and then calcination of the impregnated cerium oxide.

8. Catalytic system for the implementation of a process according to one of the preceding claims, characterized in that it comprises a coating based on an abovementioned composition on a substrate.

**Patentansprüche**

1. Verfahren zur Behandlung von Abgasen aus Verbrennungsmotoren zur Kontrolle der $H_2S$-Emissionen, dadurch gekennzeichnet, daß man einen Katalysator verwendet, der eine Zusammensetzung umfaßt, die aus Ceroxid, Eisenoxid und Praseodymoxid besteht, wobei der Eisen- und Praseodymgehalt, berechnet als Masseverhältnis der Oxide dieser Elemente in bezug auf das Ceroxid zwischen 0,5 und 50 % liegt, wobei das Ceroxid den Rest der Zusammensetzung darstellt.

2. Verfahren nach Anspruch 1, dadurch gekennzeichnet, daß man einen Katalysator verwendet, welcher die zuvor genannte Zusammensetzung auf einem Träger umfaßt.

3. Verfahren nach Anspruch 1 oder 2, dadurch gekennzeichnet, daß man einen Katalysator verwendet, der eine Zusammensetzung umfaßt, die erhalten worden ist durch ein Herstellungsverfahren, das die folgenden Verfahrensschritte umfaßt:

   - Man stellt in flüssigem Milieu eine Mischung einer Cerverbindung, einer Eisenverbindung und einer Praseodymverbindung her;
   - man erhitzt diese Mischung;
   - man isoliert den auf diese Weise erhaltenen Niederschlag;
   - man calciniert diesen Niederschlag.

4. Verfahren nach Anspruch 1 oder 2, dadurch gekennzeichnet, daß man einen Katalysator verwendet, der eine Zusammensetzung umfaßt, welche erhalten worden ist durch ein Herstellungsverfahren, das die folgenden Verfahrensschritte umfaßt:

   - Man stellt in flüssigem Milieu eine Mischung aus einer Cerverbindung, einer Eisenverbindung und einer Praseodymverbindung her;
   - man bringt diese Mischung mit einer basischen Verbindung zusammen, wodurch die Mischung ausfällt;
   - man isoliert den so erhaltenen Niederschlag;
   - man calciniert diesen Niederschlag.

5. Verfahren nach Anspruch 3 oder 4, dadurch gekennzeichnet, daß die Cerverbindung ein Cer(IV)-Salz ist.

6. Verfahren nach Anspruch 1 oder 2, dadurch gekennzeichnet, daß man einen Katalysator verwendet, der eine Zusammensetzung umfaßt, die erhalten worden ist durch ein Herstellungsverfahren, das die folgenden Verfahrensschritte umfaßt:

   - man stellt in flüssigem Milieu eine Mischung aus einem Cersol, einer Eisenverbindung und einer Praseodymverbindung her;
   - man trocknet die so erhaltene Mischung durch Atomisierung;
   - man calciniert das getrocknete Produkt.

7. Verfahren nach Anspruch 1 oder 2, dadurch gekennzeichnet, daß man einen Katalysator verwendet, der eine Zusammensetzung umfaßt, die erhalten worden ist durch Imprägnierung eines Ceroxids mit der Lösung einer Eisenverbindung und einer Praseodymverbindung, gefolgt von einer Calcinierung des imprägnierten Ceroxids.

8. Katalytisches System zur Durchfuhrung eines Verfahrens nach einem der vorhergehenden Ansprüche, dadurch gekennzeichnet, daß es eine Beschichtung auf Basis einer zuvor genannten Zusammensetzung auf einem Substrat umfaßt.